# EUROPEAN PATENT SPECIFICATION

(11) **EP 0 937 409 B1**
(45) Date of publication and mention of the grant of the patent: **07.05.2003**
(21) Application number: 99102200.5
(22) Date of filing: 04.02.1999
(51) Int. Cl.: A23G 1/00, A23P 1/16, A23L 1/054, A23L 1/0532, A23L 1/0534, A23C 9/154

(54) **Nongelled and whipped refrigerated product**
Nicht gelierte, verschäumte gekühlte Produkte
Produit réfrigéré fouetté et non gélifié

(30) Priority: 13.02.1998 EP 98102531
(43) Date of publication of application: 25.08.1999
(73) Proprietor: SOCIETE DES PRODUITS NESTLE S.A., 1800 Vevey (CH)
(72) Inventor: Graham, Judith, 81735 München (DE)
(74) Representative: Andrae, Steffen, Dr.

(56) References cited:
- EP-A- 0 345 226
- EP-A- 0 649 599
- US-A- 4 374 155
- US-A- 4 395 429
- US-A- 4 542 035
- US-A- 4 818 554
- US-A- 5 082 682
- US-A- 5 215 776
- US-A- 5 520 946

## Description

The present invention relates to a nongelled and whipped refrigerated product.

Patent EP 649,599 already relates to a milk-based refrigerated and whipped product containing an emulsifier and thickeners. The aim of this patent is to prepare a product which can be poured, despite having a high percentage overrun.

The aim of the present invention is the opposite of the abovementioned patent, namely it is desired to prepare a fairly firm, whipped, but nongelled, refrigerated product. Normally, gelled mousses, that is to say mousses in which air bubbles are trapped in a solid matrix, are commercially available: if it were desired to mix solid pieces into such a mousse, the texture of the product would break down completely. According to the present invention, it is desirable to obtain a product texture such that if these solid pieces, such as chocolate pieces or cereal petals, were mixed in, a product preserving its basic structure would remain.

The present invention relates to a refrigerated product based on at least one constituent consisting of a whipped product based on milk and containing sugar, fat and flavours, containing between 0.2 and 0.5% emulsifier, between 0.10 and 0.60% xanthan gum and between 0.10 and 0.30% carrageenan and/or between 0.2 and 0.8% microcrystalline cellulose. All the percentages of the present description are given by weight.

The milk used may be either whole milk, or semi-skimmed milk, or skimmed milk. It is also possible to take skimmed or semi-skimmed milk powder which is reconstituted with water. The fat is either fat of animal origin, for example fat obtained from milk, or fat of plant origin, for example palm oil or coconut oil. The type of fat used is not critical: a fat having a melting point of between 30 and 36°C is preferably used.

Refrigerated product is understood to mean a product which can be preserved in the refrigerator at a temperature of between 4 and 8°C for about 6 weeks.

The refrigerated product according to the invention may be flavoured with any flavour acceptable in the food sector, for example vanilla flavour, fruit flavours such as strawberry flavour and any other type of flavour. It is also possible to add therein one or more colourings acceptable in the food sector.

The sugar which can be used according to the invention is fructose, glucose, sucrose, invert sugar, fruit sugar or maltodextrin, or any artificial sweetener.

The specificity of the invention lies in the simultaneous presence of an emulsifier, of xanthan gum and of carrageenan and/or of microcrystalline cellulose in the proportions mentioned above. This presence of ingredients makes it possible to obtain a firm and nongelled whipped product.

The emulsifier used in a proportion of 0.2 to 0.5% relative to the total product is not critical. It is sufficient to use an emulsifier which is compatible in the food sector. An ester of lactic acid and of a mono- or diglyceride is preferably used.

The xanthan gum, the carrageenan and the cellulose used are standard commercially available products.

The content of fat in the product according to the invention is at least 4%, preferably not exceeding 15%. This fat content is advantageously of the order of 6 to 10%. The fat present is preferably milk fat.

The milk represents 50 to 60%, which makes it possible to have a refrigerated product having a dry matter content of between 30 and 40%. It is also possible to add thereto an ingredient for taste, such as chocolate, cocoa powder, vanilla or fruit. A quantity of starch of between 0 and 2% may also be envisaged.

The product according to the invention is normally packaged in plastic containers provided with an aluminium cover. It is whipped, that is to say that it exhibits an increase in volume due to the whipping of less than 120%, for example 30 to 120 %, preferably of the order of 70 to 100%. The whipping is carried out with machines known in the art: the abovementioned level of overrun is obtained without any problem.

A single constituent, for example a constituent with vanilla flavour or with chocolate flavour, can be packaged in the containers. However, it is also possible to fill a container with two or more constituents, for example a constituent with vanilla flavour and a constituent with chocolate flavour.

In a more concrete embodiment, a product according to the invention is manufactured containing 30 to 40% dry matter, 4 to 10% milk fat, between 0.3 and 0.5% emulsifier, 0.4% xanthan gum and 0.4% crystalline methyl cellulose or 0.2% carrageenan.

Gelatine may be also added in the product according to the invention, for example porcine gelatine. This addition is normally in an amount of 0.3 %.

The process for the manufacture of the product according to the invention is carried out in the following manner:
Milk, milk fat (cream) and chocolate, if it is present in the recipe, are mixed and the mixture is heated. A premix of the functional ingredients such as emulsifier, xanthan gum, carrageenan and crystalline cellulose with sugar is prepared in order to avoid any risk of lump formation and this premix is added to the heated milk. This mixture is then pumped, it is preheated to around 90°C and it is subjected to a UHT treatment. It is cooled to below 100°C, optionally homogenized, cooled to less than 10°C and whipped to an overrun of between 30 and 120%: finally, the chosen containers are filled and closed. The product is thus ready for storage in the refrigerator.

The difference between a standard mousse and a product according to the invention is more clearly explained in relation with the drawings in which :
- Fig. 1: is a rheology graph and
- Fig. 2: is a graph of the yield stress.

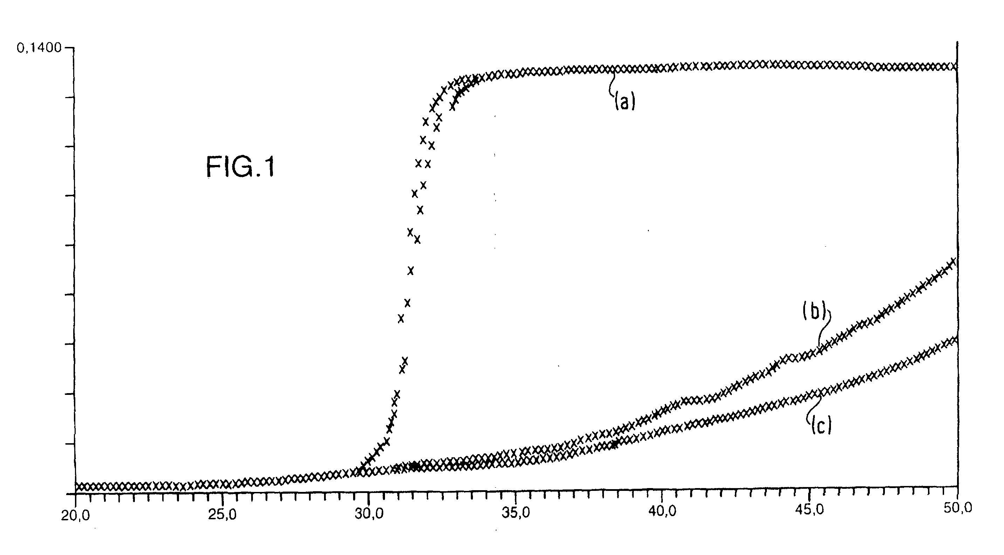

The product according to the invention has a rheology which is quite different from a gelled mousse by considering figure 1. This difference can be demonstrated in the following manner: a cone-shaped spindle is oscillated in the standard mousse and the product according to the invention, while gradually increasing the temperature from 20 to 50°C (x-axis). In a conventional mousse, the amplitude of oscillation (y-axis in radian) suddenly increases very rapidly at around 30 °C and then remains stationary (curve a), whereas according to the invention, this amplitude increases linearly (curves b and c). According to another feature (not shown), the standard mousse is more elastic and then melts, by the same increase of temperature as before. The product of the invention is less elastic and does not melt.

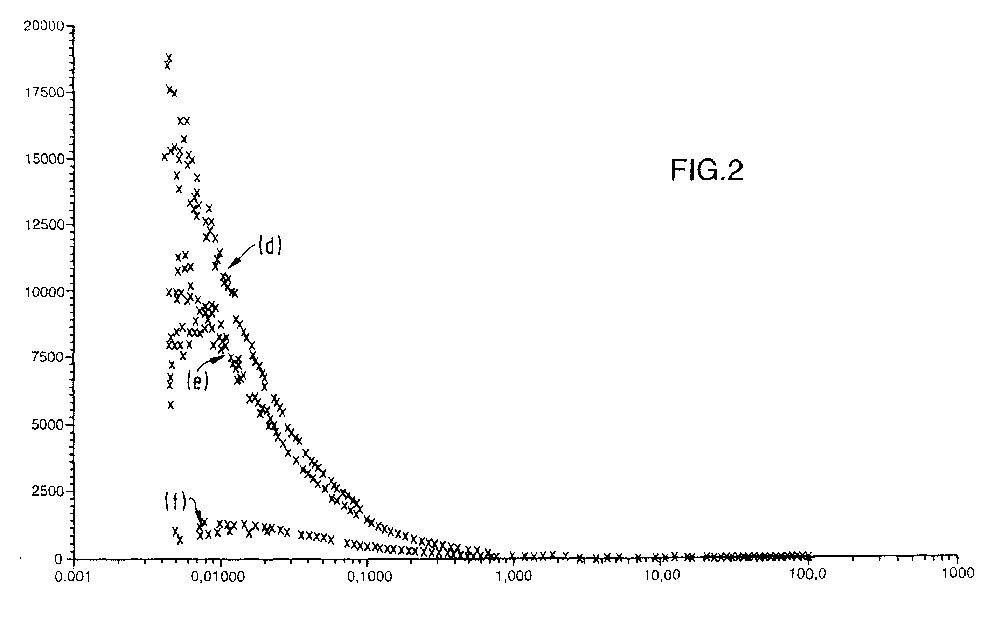

In reference now to figure 2, a standard mousse (curves d and e) has a higher yield stress than the product according to the invention (curve f). The graph of figure 2 shows along the x-axis the shear rate in sec.-1 and along the y-axis the viscosity. The viscosity is the yield stress divided through the shear rate : the yield stress is in Pascal and the viscosity in Pa.sec. For a standard mousse, the yield stress is around 115 Pa, whereas for the product according to the invention the yield stress is around 12 Pa. The remainder of the description is made with reference to the examples in which only containers with a single constituent are considered.

### Example 1: Chocolate

The operation is carried out as indicated above with liquid milk, milk fat and sugar so as to obtain a product with an overrun of 100% having a dry matter content of the order of 36%. It contains 6.2% chocolate and 1.8% cocoa powder. The content of functional ingredients is the following: 0.3% ester of lactic acid and of mono- or diglycerides, 0.4% xanthan gum and 0.4% microcrystalline cellulose.

A product is obtained which is very well preserved for 6 weeks in the refrigerator and which remains quite firm, without any separation and the bubbles remain quite homogeneously distributed.

### Example 2: Chocolate

The procedure is carried out as above, the only difference lies in the functional ingredients. A product according to the invention containing 0.3% of the same emulsifier as in Example 1, 0.4% xanthan gum and 0.2% carrageenan is prepared.

The same characteristics of preservation, firmness, nonseparation of phases and good distribution of the bubbles are observed on the finished product.

### Example 3: Vanilla

The operation is carried out as in the preceding examples, with the difference that a lower milk fat content is used, which is compensated for by an addition of skimmed milk powder and of hydrogenated vegetable oil (having a melting point of between 30 and 36°C). The product contains 0.2% vanilla flavour.

The content of functional ingredients is the following: 0.5% of the emulsifier of the preceding two examples, 0.4% xanthan gum and 0.2% carrageenan.

## Claims

1. Refrigerated product based on at least one constituent consisting of a whipped product based on milk and containing sugar, fat and flavours, **characterized in that** it contains between 0.2 and 0.5% emulsifier, between 0.10 and 0.60% xanthan gum and between 0.10 and 0.30% carrageenan and/or between 0.2 and 0.8% microcrystalline cellulose.

2. Refrigerated product according to Claim 1, **characterized in that** the fat content is at least 4%, preferably of the order of 6 to 10%.

3. Refrigerated product according to either of Claims 1 and 2, **characterized in that** it has a dry matter content of between 30 and 40%.

4. Product according to one of Claims 1 to 3, **characterized in that** the constituent exhibits an increase in volume due to the whipping of less than 120%, preferably of the order of 70 to 100%.

5. Product according to one of Claims 1 to 4, **characterized in that** it comprises two or more constituents, one with a vanilla flavour and the other with a chocolate flavour.

6. Product according to one of Claims 1 to 5, **characterized in that** it contains between 30 and 40% dry matter, between 4 and 10% milk fat, between 0.3 and 0.5% emulsifier, 0.4% xanthan gum and 0.4% crystalline methyl cellulose or 0.2% carrageenan.

## Patentansprüche

1. Gekühltes Produkt auf der Basis wenigstens eines Bestandteils, der aus einem aufgeschlagenen Produkt auf Milchbasis besteht und Zucker, Fett und Aromen enthält, **dadurch gekennzeichnet, daß** es zwischen 0,2 und 0,5 % Emulgator, zwischen 0,10 und 0,60% Xanthangummi und zwischen 0,10 und 0,30% Carrageenan und/oder zwischen 0,2 und 0,8% mikrokristalline Cellulose enthält.

2. Gekühltes Produkt nach Anspruch 1, **dadurch gekennzeichnet, daß** der Fettgehalt wenigstens 4%, vorzugsweise in der Größenordnung von 6 bis 10%, beträgt.

3. Gekühltes Produkt nach Anspruch 1 oder 2, **dadurch gekennzeichnet, daß** es einen Trockenmassegehalt zwischen 30 und 40% aufweist.

4. Produkt nach irgendeinem der Ansprüche 1 bis 3, **dadurch gekennzeichnet, daß** der Bestandteil eine Volumenzunahme aufgrund des Aufschlagens von weniger als 120%, vorzugsweise in einer Größenordnung von 70 bis 100%, aufweist.

5. Produkt nach einem der Ansprüche 1 bis 4, **dadurch gekennzeichnet, daß** es zwei oder mehr Bestandteile aufweist, einer davon mit einem Vanillearoma und der andere mit einem Schokoladearoma.

6. Produkt nach einem der Ansprüche 1 bis 5, **dadurch gekennzeichnet, daß** es zwischen 30 und 40% Trockenmasse, zwischen 4 und 10% Milchfett, zwischen 0,3 und 0,5% Emulgator, 0,4% Xanthangummi und 0,4% kristalline Methylcellulose oder 0,2% Carrageenan enthält.

## Revendications

1. Produit refroidi à base d'au moins un composant consistant en un produit aéré à base de lait et contenant du sucre, de la matière grasse et des arômes, **caractérisé en ce qu'**il contient entre 0,2 et 0,5% d'émulsifiant, entre 0,10 et 0,60% de gomme de Xanthane et entre 0,10 et 0,30% de Carraghenan et/ou entre 0,2 et 0,8% de la cellulose microcristalline.

2. Produit refroidi selon la revendication 1, **caractérisé en ce que** la teneur en matière grasse est au moins 4%, de préférence de l'ordre de 6 à 10%.

3. Produit refroidi selon la revendication 1 ou 2, **caractérisé en ce qu'**il présente une teneur en matières sèches entre 30 et 40%.

4. Produit selon l'une quelconque des revendications 1 à 3, **caractérisé en ce que** le composant présente une augmentation de volume grâce à l'aération de moins de 120%, de préférence de l'ordre de 70 à 100%.

5. Produit selon une des revendications 1 à 4, **caractérisé en ce qu'**il comprend deux composants ou plus, dont l'un à l'arôme de vanille et l'autre à l'arôme de chocolat.

6. Produit selon une des revendications 1 à 5, **caractérisé en ce que** qu'il contient entre 30 et 40% de matières sèches, entre 4 et 10% de la matière grasse lactique, entre 0,3 et 0,5% d'émulsifiant, 0,4% de gomme de Xanthane et 0,4% de la cellulose méthylique cristalline ou 0,2% de Carraghenan.
